(19) Europäisches Patentamt
European Patent Office
Office européen des brevets

(11) **EP 4 726 835 A1**

(12) **EUROPEAN PATENT APPLICATION**
published in accordance with Art. 153(4) EPC


(43) Date of publication:
**15.04.2026 Bulletin 2026/16**

(21) Application number: **24865943.5**

(22) Date of filing: **13.09.2024**

(51) International Patent Classification (IPC):
***H01M 10/0565*** *(2010.01)* ***H01M 10/42*** *(2006.01)*
***H01M 10/052*** *(2010.01)*

(52) Cooperative Patent Classification (CPC):
**H01M 10/056; H01M 10/052; H01M 10/0525; H01M 10/0565; H01M 10/42;** H01M 2300/0071; H01M 2300/0082; H01M 2300/0091; Y02E 60/10

(86) International application number:
**PCT/KR2024/096146**

(87) International publication number:
**WO 2025/058504 (20.03.2025 Gazette 2025/12)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **15.09.2023 KR 20230123075**
**02.04.2024 KR 20240044702**
**11.09.2024 KR 20240123905**



(71) Applicant: **LG Energy Solution, Ltd.**
**Seoul 07335 (KR)**

(72) Inventors:
- **NAM, Sung Hyun**
  **Daejeon 34122 (KR)**
- **KIM, Dong Kyu**
  **Daejeon 34122 (KR)**

(74) Representative: **BCKIP Part mbB**
**MK1**
**Landsbergerstraße 98, 3.Stock**
**80339 München (DE)**


(54) **ELECTROLYTE AND ALL-SOLID-STATE BATTERY COMPRISING SAME**


(57) The present disclosure relates to an electrolyte and an all-solid-state battery comprising the same. The electrolyte includes: a polymer mixture including a PEO (polyethylene oxide)-based polymer having crosslinkable functional groups, and a non-crosslinkable PEO-based polymer; a ceramic compound; and a polar compound, and exhibits excellent ionic conductivity despite its low content of the polar compound.


[FIG. 1]

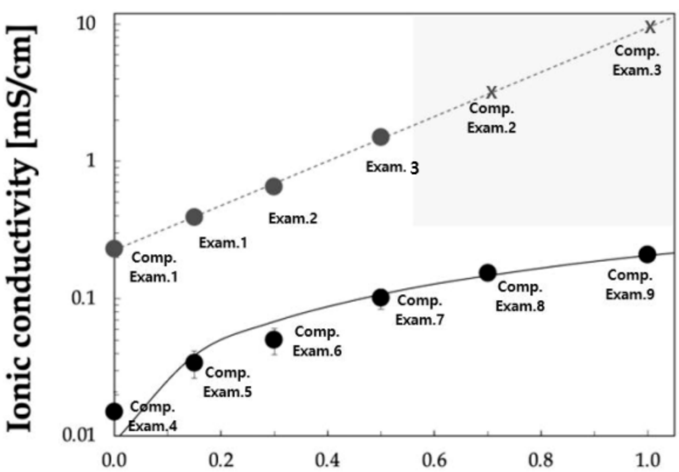





EP 4 726 835 A1

## Description

## [TECHNICAL FIELD]

CROSS-REFERENCE TO RELATED APPLICATION(S)

The present application claims priority to and the benefit of Korean patent application no. KR 10-2023-0123075 filed on September 15, 2023, Korean patent application no. KR 10-2024-0044702 filed on April 2, 2024, and Korean patent application no. KR 10-2024-0123905 filed on September 11, 2024, the entire contents of which are incorporated herein by reference.

The present disclosure relates to an electrolyte and an all-solid-state battery comprising the same.

## [BACKGROUND ART]

Lithium-ion batteries that use a liquid electrolyte have a structure in which the positive electrode and the negative electrode are divided by a separator, so if the separator is damaged by deformation or external impact, a short circuit may occur, which can lead to risks such as overheating or explosion. Therefore, the development of a solid electrolyte that can ensure safety in the field of lithium-ion secondary batteries can be said to be a very important task.

Lithium secondary batteries using solid electrolytes have the advantage of increasing the safety of the battery, improving the reliability of the battery by preventing electrolyte leakage, and making it easy to manufacture thin batteries. In addition, lithium metal can be used as a negative electrode, which can improve energy density. Accordingly, it is expected to be applied to small secondary batteries as well as highcapacity secondary batteries, such as those for electric vehicles, and is attracting attention as a next-generation battery.

Among solid electrolytes, polymer solid electrolytes can be made of ionconducting polymer materials, and can optionally be used in the form of a composite solid electrolyte that mixes these polymer materials with inorganic materials.

Such a conventional hybrid (composite) solid electrolyte is manufactured by dispersing inorganic powders such as oxide-based ceramics in a polymer matrix. The conventional solid electrolyte has excellent stability against ignition and combustion, and has higher ionic conductivity, compared to existing liquid electrolytes and polymer solid electrolytes.

However, the existing composite solid electrolytes exhibit difficulties in fulfilling the basic prerequisites, such as improving the dispersibility of oxide-based ceramic particles within the polymer matrix and optimizing the physical properties of the polymer matrix used. In particular, when using a highly crystalline polymer such as polyethylene oxide (PEO) as a matrix, there is a problem in that it is difficult to manufacture an electrolyte with improved ionic conductivity. In other words, due to the high crystallinity of the PEO polymer, the chain mobility of the polymer chain is inhibited, and there are restrictions on the movement of lithium ions inside the polymer solid electrolyte. As a result, there has been a limitation to improvement of the ionic conductivity of the polymer solid electrolyte.

As a result, conventional composite solid electrolytes are often used by injecting a significant amount of polar solvent in order to exhibit an ionic conductivity at a prescribed level or more. In such cases, it is difficult to sufficiently have the safety and stability inherent to solid electrolytes, and there is a drawback in that sufficient ionic conductivity is not exhibited despite the addition of a significant amount of polar solvent.

## [DETAILED DESCRIPTION OF THE INVENTION]

### [Technical Problem]

It is an object of the present disclosure to provide an electrolyte in the form of a composite solid electrolyte that exhibits excellent ionic conductivity.

It is another object of the present disclosure to provide an all-solid-state battery that includes the above electrolyte and thus exhibits excellent electrochemical characteristics and operating characteristics.

### [Technical Solution]

According to certain aspects, there is provided an electrolyte comprising: a polymer mixture including a PEO (polyethylene oxide)-based polymer having crosslinkable functional groups, and a non-crosslinkable PEO-based polymer; a ceramic compound; and a polar compound,

wherein at least some of the crosslinkable functional groups form crosslinks, so that the PEO-based polymer forms a three-dimensional network structure,
wherein the polar compound is included in an amount of 0.1% by weight or more and less than 10% by weight based on

the total weight of the electrolyte, and is either dispersed between the polymer chains forming the three-dimensional network structure, or bound to the polymer chains.

According to certain embodiments, the electrolyte may exhibit excellent ionic conductivity, wherein the low-temperature ionic conductivity measured at a temperature of -30°C to -10°C is 0.015 mS/cm or more, the room-temperature ionic conductivity measured at a temperature of 25°C is 0.5 mS/cm or more, and the high-temperature ionic conductivity measured at a temperature of 50°C is 1.1 mS/cm or more.

According to certain embodiments, the electrolyte may further comprise a multifunctional crosslinking agent, and at least some of the crosslinkable functional group form crosslinks with each other via the multifunctional crosslinking agent.

In the above-mentioned electrolyte, the crosslinkable functional groups may be bound to the PEO-based polymer via an alkylene linker or an alkylene oxide linker having a carbon number from 0 to 10 (with the proviso that the alkylene linker having 0 carbon number represents a single bond),
and may be selected from the group consisting of a hydroxyl group, a carboxyl group, an isocyanate group, a nitro group, a cyano group, an amine group, an amide group, an epoxy group and an allyl group.

According to certain embodiments, the electrolyte may further comprise a lithium salt. The lithium salt may be included in an amount of 25 to 45 parts by weight based on 100 parts by weight of the polymer mixture.

In the above-mentioned electrolyte, the polymer mixture may include the PEO-based polymer having crosslinkable functional groups to the non-crosslinkable PEO-based polymer in a weight ratio of 5:5 to 9:1.

According to certain embodiments, the PEO-based polymer having crosslinkable functional groups may be a copolymer containing repeating units of the following Formulas 1 to 3:

[Formula 1]

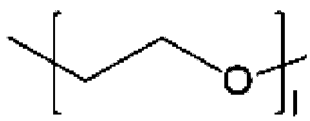

[Formula 2]

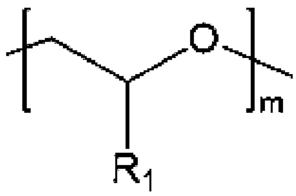

[Formula 3]

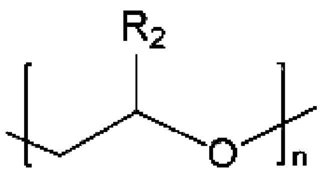

wherein in Formulas 1 to 3, $R_1$ represents $-CH_2-O-(CH_2-CH_2-O)_k-R_3$, where k is 0 to 20, and $R_3$ represents an alkyl group having a carbon number from 1 to 5,
$R_2$ represents a substituent group in which one or more crosslinkable functional groups selected from the group consisting of a hydroxyl group, a carboxyl group, an isocyanate group, a nitro group, a cyano group, an amine group, an amide group, an epoxy group and an allyl group are bound to a polymer chain via an alkylene linker or alkylene oxide linker having a carbon number from 0 to 10 (with the proviso that an alkylene linker having a carbon number of 0 represents a single bond), and
l, m and n are the number of the repeating units, wherein l and n are each independently an integer from 1 to 100000,

and m is an integer from 0 to 100000.

In addition, the non-crosslinkable PEO-based polymer may be a copolymer containing repeating units of the following Formulas 1 and 2:

[Formula 1]

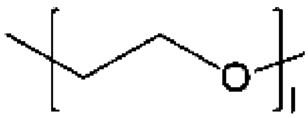

[Formula 2]

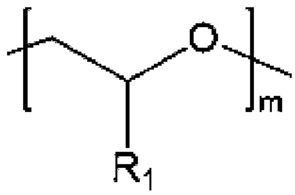

wherein in Formulas 1 and 2, $R_1$ represents $-CH_2-O-(CH_2-CH_2-O)_k-R_3$, k is 0 to 20, $R_3$ represents an alkyl group having a carbon number from 1 to 5, and

l and m are the number of the repeating units, and are each independently an integer from 1 to 100000.

In the above-mentioned electrolyte, the polar compound may include one or more selected from the group consisting of carbonate-based compounds and sulfonyl-based compounds. In more specific embodiments, the polar compound may include one or more selected from the group consisting of ethyl methyl carbonate (EMC), dimethyl carbonate (DMC), diethyl carbonate (DEC), ethylene carbonate (EC), propylene carbonate (PC), vinylene carbonate (VC), and sulfolane.

Furthermore, the ceramic compound may include an oxide-based solid electrolyte of lithium metal oxide or lithium metal phosphate. More specifically, the ceramic compound may include one or more selected from the group consisting of a lithium-lanthanum-zirconium oxide (LLZO)-based compound, a lithium-silicon-titanium phosphate (LSTP)-based compound, a lithium-lanthanum-titanium oxide (LLTO)-based compound, a lithium-aluminum-titanium phosphate (LATP)-based compound, a lithium-aluminum-germanium phosphate (LAGP)-based compound, and a lithium-lanthanum-zirconium-titanium oxide (LLZTO)-based compound.

Furthermore, the ceramic compound may be in the form of particles having a diameter of 100 nm to 1000 nm. The ceramic compound may be included in an amount of 10 to 100 parts by weight based on 100 parts by weight of the polymer mixture.

According to another aspect, there is provided a method for preparing the electrolyte, the method comprising the steps of: mixing a polymer mixture including a PEO-based polymer having crosslinkable functional groups and a non-crosslinkable PEO-based polymer, and a ceramic compound; performing a crosslinking reaction of the PEO-based polymer having crosslinkable functional groups included in the mixture; and exposing the crosslinked result product to a vaporized polar compound to vapor-deposit the polar compound onto the crosslinked result product.

In this preparation method, as the polar compound is vapor-deposited, the polar compound may be dispersed on or bound to the electrolyte in a gaseous state, and may be included in the electrolyte in the low content described above.

According to further additional aspects, there is provided an all-solid-state battery comprising an electrolyte layer comprising the electrolyte of the certain embodiments described above.

**[Advantageous Effects]**

The electrolyte according to certain embodiments of the disclosure not only maintains the intrinsic structural properties of the polymer without deforming or breaking the polymer chain, but also improves the mobility of the polymer chain and uniformly distributes ceramic particles in the electrolyte, thereby capable of improving the ionic conductivity of the electrolyte.

In addition, the electrolyte contains a trace amount of the polar compound, for example, in a vapor-deposited state, thereby capable of exhibiting improved ionic conductivity and mechanical properties.

In particular, it was confirmed that as the electrolyte contains both a crosslinkable PEO-based polymer and a non-crosslinkable PEO-based polymer, it is possible to optimize the degree of dispersion of the ceramic particles and exhibit high ionic conductivity at the overall battery operating temperature.

Therefore, the electrolyte can greatly contribute to providing an all-solid-state battery that exhibits excellent operating characteristics.

**[BRIEF DESCRIPTION OF THE DRAWING]**

FIG. 1 is a graph showing a comparison of the ionic conductivities at room temperature (25°C) of the electrolytes of Examples 1 to 3 and Comparative Examples 1 to 9.

FIG. 2 is a graph showing a comparison of the ionic conductivities by temperature of the electrolytes of Examples 3 to 6 and Comparative Examples 7, 10, and 11.

**[DETAILED DESCRIPTION OF THE EMBODIMENTS]**

Hereinafter, specific embodiments will be described in more detail for a better understanding of the present disclosure.

Terms or words used in the specification and the appended claims should not be construed as limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

As used herein, the term "bond" may mean a form in which a polar compound is "bound" to a polymer chain, e.g., a chain of a PEO-based polymer having crosslinkable functional groups. The "bonding" broadly refers to a form in which a polar solvent is vapor-deposited, for example, a polar compound in a gaseous state is maintained in a state fixed to a polymer chain. In other words, the term "bond" is not limited to a specific type of physical bond, chemical bond, etc., but may include a state of being fixed by various types of bonds including a physical bond, a chemical bond, etc., or a state of being simply attached and fixed via adsorption, or a state in which the polar compound is included in a three-dimensional network structure formed by crosslinking of the polymer, such as being located adjacent to and/or fixed to a polymer chain or crosslinked structure.

As used herein, the term "three-dimensional network structure" includes a structure that includes a three-dimensional frame and an internal space formed by the frame, wherein the frame may include a polymer chain including a crosslink formed by the crosslinkable functional groups, e.g., a crosslink between the crosslinkable functional groups and/or a crosslink between the crosslinkable functional group and a crosslinking agent. The three-dimensional network structure may also be referred to as a crosslinked structure.

In the present disclosure, the presence or inclusion of a polar compound (e.g. a polar solvent) in an electrolyte in a "gaseous state" may define a state distinct from the case in which the polar solvent or the electrolyte liquid containing the same is injected in a liquid state. That is, this indicates that when the polar compound is vapor-deposited in the electrolyte in a vapor state, the polar compound exists in a state distinct from the liquid injected electrolyte immediately after preparing the electrolyte or during the charging and discharging process of an all-solid-state secondary battery containing the same. However, depending on the storage or operating conditions of the polar solvent and/or battery, the vapor-deposited polar compound may have a locally or temporarily liquefied state. Even in such a case, the vapor-deposited polar compound exhibits a higher mobility than the polar solvent injected in a liquid state, and exhibits a state different from the polar solvent in a liquid state, and so can also be considered to exist or be included in the "gaseous state" mentioned above.

On the other hand, conventionally, in order to improve the ionic conductivity of the solid electrolyte, an electrolyte was prepared in which ceramic compounds such as oxides were dispersed in a polymer matrix. However, such an electrolyte may exhibit a problem in reducing the ionic conductivity when the oxide-based ceramic particles in the polymer matrix are unevenly distributed or when a highly crystalline polymer such as polyethylene oxide is used as the polymer.

In this regard, conventionally, in order to improve the ionic conductivity of the solid electrolyte and enhance the dispersibility of the ceramic compound, etc., a solid electrolyte was immersed or supported in an electrolyte liquid or a solvent in a liquid state, or the electrolyte liquid or polar solvent was directly injected into the solid electrolyte in a liquid state. In this way, when a significant amount of an electrolyte liquid or polar solvent is directly added to a solid electrolyte, the ionic conductivity of the solid electrolyte is improved to some extent. However, in such a case, the excellent safety and stability due to the application of a solid electrolyte can be inhibited. In addition, the degree of improvement in ionic conductivity due to the addition of an electrolyte liquid or polar solvent is also insufficient, and thus it is necessary to inject a significant

amount of polar solvent.

In addition, when a liquid electrolyte or polar solvent is directly added or injected into a solid electrolyte in a liquid state, the polymer chain may be damaged or bonds within the polymer may be broken due to undesired side reactions between the polymer and the liquid phase, causing damage to the solid electrolyte. Accordingly, the structure could collapse, or the ionic conductivity could decrease due to this damage.

Further, when a polar solvent or a liquid electrolyte is directly injected into the solid electrolyte, liquid molecules rapidly diffuse within the solid electrolyte to cause a fast relaxation of polymer chains and promote gelation on the surface, which may cause a deterioration in mechanical properties. In addition, problems such as leakage of liquid electrolyte or polar solvent may occur, which may reduce the safety of the battery.

Thus, the present inventors have applied a method in which a polar compound derived from a polar solvent is vapor-deposited to an electrolyte containing a polymer crosslinked with a PEO (polyethylene oxide)-based copolymer modified with a crosslinkable functional group and a ceramic compound. In addition, they have optimized a crosslinking reaction and a three-dimensional network structure formation in the electrolyte by mixing a non-crosslinkable PEO-based polymer with the PEO-based polymer having crosslinkable functional groups.

According to certain aspects, the electrolyte prepared in this way is an electrolyte comprising: a polymer mixture including a PEO (polyethylene oxide)-based polymer having crosslinkable functional groups, and a non-crosslinkable PEO-based polymer; a ceramic compound; and a polar compound,

wherein at least some of the crosslinkable functional groups form crosslinks, so that the PEO polymer forms a three-dimensional network structure, the polar compound is included in an amount of 0.1% by weight or more and less than 10% by weight based on the total weight of the electrolyte, and the polar compound may be either dispersed between the polymer chains forming the three-dimensional network structure, or bound to the polymer chains.

It was confirmed that this electrolyte exhibits improved ionic conductivity even while containing a trace amount of a polar compound derived from a polar solvent. In such an electrolyte, the polar compound may exhibit a state different from that of a polar solvent injected in the form of a liquid in a large amount due to the vapor deposition and trace content. For example, at least some of the polar compound may exist in the electrolyte in a gaseous state, and may be locally or temporarily converted into a liquid or gas-liquid coexistence state during operation of the battery. Furthermore, the polar compound may be uniformly dispersed within the three-dimensional network structure defined by the crosslinks, or may be bound or attached to the polymer chains between the three-dimensional network.

It is predicted that the different states of such polar compounds can affect the physical properties such as crystallinity of the PEO-based polymer, and thus increases the chain mobility of the polymer chain, which can improve the conductivity of lithium ions contained in the electrolyte. Furthermore, the electrolyte may exhibit superior ionic conductivity due to the ceramic compound uniformly dispersed within the three-dimensional network structure.

The polar compound may be included in an amount of 0.1% by weight or more and less than 10% by weight based on the total weight of the electrolyte. For example, the content of the polar compound may be 0.1% by weight or more, 0.5% by weight or more, 1% by weight or more, 2% by weight or more, 3% by weight or more, or 4% by weight or less, 5% by weight or less, 6% by weight or less, 7% by weight or less, 8% by weight or less, 9% by weight or less, or less than 10% by weight. When the content of the polar compound is less than 0.1% by weight, it is difficult to induce a change in the chain conformation inside the polymer, and thus, the ionic conductivity of the electrolyte is not improved despite the vapor deposition of the polar compound. On the contrary, when the content of the polar compound is 10% by weight or more, it exhibits the same state as the polar solvent injected in a liquid state in the electrolyte, which makes it difficult to obtain the effects due to vapor deposition. Thus, the content of polar solvent or liquid electrolyte that substantially always exists in a liquid state in the electrolyte is high, so the polymer begins to take on the properties of a semi-solid battery. The mechanical strength of the electrolyte may decrease due to gelation of the polymer, and the ionic conductivity of the electrolyte may also become insufficient.

The content of the polar compound can be calculated by measuring the content of the polar compound that evaporates while heating the electrolyte. Specifically, taking into account the boiling point and vapor pressure by temperature of the polar compound, the content of the polar compound can be calculated by a method comprising: heating the polar compound at an increasing temperature from a temperature at which the polar compound begins to evaporate, for example, 40°C or more or 50°C or more, to a temperature between the boiling point and the boiling point + 10°C, collecting the polar compound evaporating within the temperature range in the form of a liquid, and measuring the weight of such liquid form. When the measured amount reaches a saturation (for example, when the measured amount no longer increases) with the passage of the heating time under the temperature rise, the calculation can be stopped by regarding this as the total amount of the polar compound contained in the electrolyte.

In addition, the content of the polar compound contained in the electrolyte can be adjusted through the amount of the polar compound used and/or the vapor deposition conditions such as the vapor deposition time and temperature in the vapor deposition step described below, which will be apparent from the embodiments described below.

Meanwhile, the electrolyte contains the crosslinkable polymer and the non-crosslinkable polymer together, so that the crosslink and the three-dimensional network structure are optimized, and the content of the polar compound, etc.

are adequate, which can exhibit excellent ionic conductivity at the entire operating temperature of the battery.

In certain embodiments, the electrolyte can maximize the degree of dispersion of the ceramic compound and the mobility of lithium ions even at a low temperature of, for example, 0°C or less, or -30°C to -10°C. As a result, the electrolyte can exhibit excellent ionic conductivity of 0.015 mS/cm or more, or 0.15 mS/cm or more, or 0.20 mS/cm or more, or 0.20 mS/cm to 0.50 mS/cm, even at the low temperature described above.

In addition, the electrolyte may exhibit excellent ionic conductivity even at room temperature or high temperature. For example, the electrolyte may have a room-temperature ionic conductivity of 0.5 mS/cm or more, or 1.3 mS/cm or more, or 1.5 mS/cm or more, or 1.5 mS/cm to 2.5 mS/cm as measured at a temperature of 25°C, and a high-temperature ionic conductivity of 1.1 mS/cm or more, or 3.0 mS/cm or more, or 3.1 mS/cm or more, or 3.1 mS/cm to 4.5 mS/cm as measured at a temperature of 50°C.

In the electrolyte of certain embodiments described above, the polar compound may be dispersed between the polymer chains forming the three-dimensional network structure, or may have a form attached, adsorbed, or bound to the surface or interior of the polymer chains.

Such an electrolyte include a polar compound that are included or bound in a small amount in a three-dimensional network structure by vapor deposition, which will be described below. The polar compound has a different state from the polar solvent that is injected in large quantities into the electrolyte in a liquid state. The state of the polar compound can be confirmed, for example, by separating the electrolyte layer including the polar compound from an all-solid-state battery, etc. at a temperature lower than the boiling point of the polar compound, and then observing it with the naked eye or an electron microscope. Under this observation, if no liquid component is observed on the surface of the electrolyte layer, it can be considered to have the same state as the electrolyte of certain embodiments in which the polar compound is vapor-deposited.

Unlike the same, when a polar solvent or electrolyte liquid in a liquid state is injected into the electrolyte, a liquid component or a component showing wettability can be observed on the surface of the electrolyte layer. In addition, the electrolyte of certain embodiments in which the polar compound is vapor-deposited exhibits improved ionic conductivity, despite the low content of polar compounds, as compared to the case where a liquid-state polar solvent or electrolyte is injected, as can be confirmed through the embodiments described below. Even through such comparison of ionic conductivity, and the like, an electrolyte in which the polar compound is vapor-deposited and contained in a gaseous state can be confirmed.

On the other hand, in the electrolyte of certain embodiments, the crosslinkable functional groups may be directly bound to the main chain or the like of the PEO-based polymer. Alternatively, the crosslinkable functional groups may be linked thereto via an alkylene or alkylene oxide linker. Thus, the crosslinkable functional groups may be bound via an alkylene linker or alkylene oxide linker having a carbon number from 0 to 10 (with the proviso that an alkylene linker having a carbon number of 0 represents a single bond), and may be one or more selected from the group consisting of a hydroxyl group, a carboxyl group, an isocyanate group, a nitro group, a cyano group, an amine group, an amide group, an epoxy group and an allyl group.

In certain embodiments of the disclosure, the crosslinkable functional groups may include two or more types of the functional groups. The crosslinkable functional groups may be the same or different from each other. When the crosslinkable functional groups are different, multiple types of repeating units each containing these functional groups may be included. Also, when multiple types of crosslinkable functional groups are included, control of the mobility and ionic conductivity of the polymer chain may become easier.

The crosslinkable functional group refers to a functional group that can form crosslinks between crosslinkable functional groups, and/or form crosslinks with each other via a crosslinking agent, and can be bound to the polymer chain in the form of a side chain.

In more specific embodiments, the PEO-based polymer having crosslinkable functional groups may be a copolymer containing repeating units of the following Formulas 1 to 3:

[Formula 1]

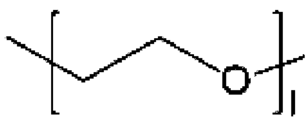

[Formula 2]

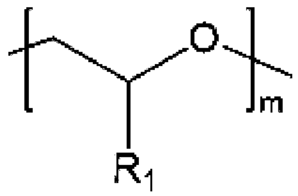

[Formula 3]

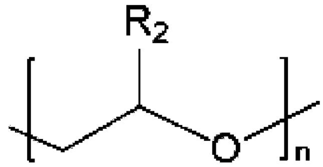

wherein in Formulas 1 to 3, $R_1$ represents $-CH_2-O-(CH_2-CH_2-O)_k-R_3$, where k is 0 to 20, and $R_3$ represents an alkyl group having a carbon number from 1 to 5,

$R_2$ represents a substituent group in which one or more crosslinkable functional groups selected from the group consisting of a hydroxyl group, a carboxyl group, an isocyanate group, a nitro group, a cyano group, an amine group, an amide group, an epoxy group and an allyl group are bonded to a polymer chain via an alkylene linker or alkylene oxide linker having a carbon number from 0 to 10 (with the proviso that an alkylene linker having a carbon number of 0 represents a single bond), and

l, m and n are the number of the repeating units, wherein l and n are each independently an integer of from 1 to 100000, or from 50 to 80000, or from 100 to 50000, and m is an integer from 0 to 100000, or from 50 to 80000, or from 100 to 50000.

For example, the crosslinkable functional groups of $R_2$ can form a polymer matrix of a three-dimensional network structure formed by the crosslinks. By forming a three-dimensional network structure by the crosslinks, the mechanical properties of the electrolyte can be improved, and the vapor-deposited polar compound may be contained or bound within such a three-dimensional network structure to provide an electrolyte of certain embodiments having more improved ionic conductivity.

Further, it is obvious that the PEO-based polymer may include two or more types of repeating units of Formula 3 in which the $R_2$ is crosslinkable functional groups different from each other, and may also include one or more types of repeating units of Formula 2.

When the l, m and n are each too small, it is difficult to form a polymer because the molecular weight is small, and when the l, m and n are each too large, the solubility during preparation of a polymer solution decreases due to an increase in viscosity, and molding for preparing an electrolyte may become difficult. In particular, when the number of the repeating unit containing crosslinkable functional groups among l, m, and n is excessively large, degree of crosslinking is excessively increased to decrease mobility of the polymer chain, thereby reducing ionic conductivity of the electrolyte.

On the other hand, the non-crosslinkable PEO-based polymer included in the electrolyte of certain embodiments may have, for example, a structure in which the repeating unit containing crosslinkable functional groups is omitted in the above-mentioned crosslinkable PEO-based polymer. As such non-crosslinkable PEO-based polymers are mixed, degree of crosslinking and formation of a three-dimensional network structure in the electrolyte can be optimized, thereby further improving dispersibility of the ceramic compound and mobility of lithium ions. Consequently, the electrolyte of certain embodiments may exhibit excellent ionic conductivity.

In more specific embodiments, the non-crosslinkable PEO-based polymer is a copolymer containing repeating units of the following Formulas 1 and 2, and may be a copolymer that does not have the repeating units of the Formula 3:

[Formula 1]

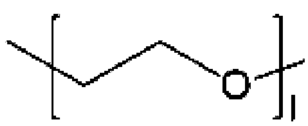

[Formula 2]

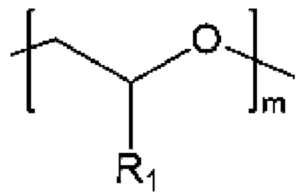

wherein in Formulas 1 and 2, $R_1$ represents $-CH_2-O-(CH_2-CH_2-O)_k-R_3$, k is 0 to 20, $R_3$ represents an alkyl group having a carbon number from 1 to 5, and l and m are the number of the repeating units and are each independently an integer from 1 to 100,000, 50 to 80,000, or 100 to 50,000.

As used herein, "hydroxy group" refers to -OH group.

As used herein, "carboxyl group" refers to -COOH group.

As used herein, "isocyanate group" refers to a -N=C=O group.

As used herein, "nitro group" refers to $-NO_2$ group.

As used herein, "cyano group" refers to a -CN group.

As used herein, "amide group" refers to -C(=O)NR'R", wherein R' and R" may be each independently hydrogen or a $C_1$ to $C_5$ alkyl group, or R' and R" together with the N atom to which they are attached may form a heterocycle having $C_4$ to $C_8$ atoms in the ring structure.

As used herein, "amine group" may be selected from the group consisting of a monoalkylamine group; a monoarylamine group; a monoheteroarylamine group; a dialkylamine group; a diarylamine group; a diheteroarylamine group; an alkylarylamine group; an alkylheteroarylamine group; and an arylheteroarylamine group, and the carbon number thereof is not particularly limited, but is preferably 1 to 30. Specific examples of the amine group include a methylamine group, a dimethylamine group, an ethylamine group, a diethylamine group, a phenylamine group, a naphthylamine group, a biphenylamine group, a dibiphenylamine group, an anthracenyl amine group, a 9-methyl-anthracenylamine group, a diphenylamine group, a phenylnaphthylamine group, a ditolylamine group, a phenyltolylamine group, a triphenylamine group, a biphenylnaphthylamine group, a phenylbiphenyl amine group, a biphenylfluorenylamine group, a phenyltriphenylenylamine group, a biphenyltriphenylenylamine group, and the like, but are not limited thereto. Further, "amino group" refers to $-NH_2$.

As used herein, "allyl group" refers to $-CH_2-CH=CH_2$ group.

The weight average molecular weights (Mw) of the above-mentioned crosslinkable and non-crosslinkable PEO-based polymers may respectively be 100,000 g/mol to 4,000,000 g/mol, and specifically, it may be 100,000 g/mol or more, 200,000 g/mol or more, or 300,000 g/mol or more, and 3,000,000 g/mol or less, or 2,000,000 g/mol or less. If the weight average molecular weight (Mw) of the polymer is too small, the mechanical properties of the manufactured electrolyte may not be adequate. If the weight average molecular weight (Mw) of the polymer is too large, the solubility may decrease when preparing a polymer solution due to an increase in viscosity and molding during manufacturing an electrolyte may become difficult. Additionally, the ionic conductivity of the electrolyte may decrease due to increased crystallinity and decreased chain mobility inside the electrolyte.

Further, if the number of repetitions of the repeating unit of Formula 3 containing crosslinkable functional groups is too large, degree of crosslinking increases excessively, and mobility of polymer chains decreases, which may lead to a decrease in the ionic conductivity of the electrolyte.

Further, the polymer may be a random copolymer or a block copolymer.

Meanwhile, the electrolyte of certain embodiments may include the crosslinkable and non-crosslinkable PEO-based polymers so that the weight ratio of the non-crosslinkable PEO-based polymer is more than 0 and 0.55 or less, or 0.05 to 0.53, or 0.3 to 0.5, based on the total weight of the polymer mixture including the crosslinkable and non-crosslinkable PEO-based polymers. At this time, the weight ratio of the crosslinkable PEO-based polymer may be the remaining weight ratio excluding the non-crosslinkable polymer. In certain embodiments, the PEO-based polymer having the crosslinkable functional group: the non-crosslinkable PEO-based polymer may be mixed at a weight ratio of, for example, 5:5 to 9:1, or 5:5 to 7:3.

In this way, as the ratio of each polymer is optimized, the crosslinks and the three-dimensional network structure in the composite solid electrolyte may be optimized. As a result, degree of dispersion of the ceramic compound and mobility of lithium ions can be maximized. Therefore, the ionic conductivity of the electrolyte according to certain embodiments can be further improved.

If the content ratio of the non-crosslinkable PEO-based polymer becomes too high, a three-dimensional network structure by crosslinks is not properly formed and vapor deposition of the polar compound is not properly achieved, which may result in a decrease in the mechanical properties and ionic conductivity of the electrolyte. Further, even when the

content ratio of the non-crosslinkable PEO-based polymer is too low, the ionic conductivity may decrease.

Meanwhile, in certain embodiments of the disclosure, the polar compound may be contained or bound to the surface or interior of the polymer chain by vapor deposition, for example, in a substantial gaseous state (including a localized, temporary liquid state). Specifically, the polar compound may be diffused or dispersed between polymer chains forming a three-dimensional network structure by crosslinking of the crosslinkable PEO-based polymer, or may be adsorbed or bound to the surface or interior of the polymer chain.

The polar compound is a gas molecule of a polar solvent used in the vapor deposition process, and may be contained in a form in which gas molecules of the polar solvent are adsorbed to the polymer during vapor deposition, and then are diffused into the polymer chain and bound to the polymer chain, or it may be contained in a dispersed or diffused form in the internal space between polymer chains. The polar compound is either bound to the polymer chain, or contained in a dispersed form in the internal space between the polymer chains, which can improve the ionic conductivity of the finally manufactured electrolyte despite its low content.

Specifically, a polar compound bound to the polymer chain or contained between the polymer chains can act as a plasticizer and plasticize the polymer. The plasticized polymer may have an increased amorphous region inside, thereby improving the mobility of the polymer chain. As the mobility of the polymer chain improves, the ion hopping effect inside the polymer increases, and the ionic conductivity of the electrolyte can be improved.

Further, the polar compound can act as an intermediate for smooth ion transfer through ion hopping. Since the affinity between lithium ions and polar compounds is stronger than the affinity between lithium ions and the ether oxygen of PEO-based polymers, the transfer of lithium ions may be faster and easier within the polymer to which the polar compound is adsorbed. That is, as the polar compound flows in the inside of the polymer, the cation solvation effect of lithium ions may increase to improve ion mobility, thereby increasing the ionic conductivity of the electrolyte.

Moreover, the polar compound may include one or more selected from the group consisting of a carbonate-based compound and a sulfonyl-based compound.

Specifically, the polar compound may include one or more selected from the group consisting of ethyl methyl carbonate (EMC), dimethyl carbonate (DMC), diethyl carbonate (DEC), ethylene carbonate (EC), propylene carbonate (PC), vinylene carbonate (VC) and sulfolane, or may include a combination thereof.

In certain embodiments of the disclosure, the electrolyte may include a crosslink between crosslinkable functional groups. In addition, the electrolyte may further include a crosslinking agent and thus may further include a crosslink between the crosslinking agent and the crosslinkable functional group. For example, at least some of the crosslinkable functional groups may form crosslinks with each other via the crosslinking agent, thereby forming the above-mentioned three-dimensional network structure.

The crosslinks may be urethane bonds, ester bonds, hydrogen bonds, or bonds formed by radical polymerization reaction of a terminal vinyl group in an allyl group ($-CH_2-CH=CH_2$), but are not limited thereto.

Further, when the crosslinking agent is added in a preparation process of the electrolyte, a crosslink between the crosslinking agent and the crosslinkable functional group may be formed. The crosslink may be a hydrogen bond, a bond formed by Lewis acid-base interaction, an ionic bond, a coordination bond, or a bond formed by radical polymerization.

The crosslinking agent is not particularly limited as long as it is a multifunctional crosslinking agent that can form a crosslink with the crosslinkable functional group. For example, the crosslinking agent may be one or more multifunctional crosslinking agents, e.g., a bifunctional or higher polyvalent compound, selected from the group consisting of trimethylolpropane trimethacrylate, poly(ethylene glycol)diacrylate, poly(ethylene glycol)dimethacrylate, ethylene glycol dimethylacrylate (hereinafter referred to as "EGDMA"), 1,3-diisopropenylbenzene(DIP), 1,4-diacryloyl piperazine, 2-(diethylamino)ethyl methacrylate, 2,6-bisacryloylamidopyridine, 3-(acryloyloxy)-2-hydroxypropyl methacrylate, 3,5-bis(acryloylamido)benzoic acid, 3-aminopropyltriethoxysilane, 3-isocyanatopropyltriethoxysilane, 3-methylacryloxypropyl trimethoxysilane, bis-(1-(tert-butylperoxy)-1-methylethyl)-benzene, dicumyl peroxide, dimethacrylate, divinylbenzene, ethylene glycol maleic rosinate acrylate, glycidylmethacrylate, hydroxyquinoline, diphenyldiethoxysilane, maleic rosin glycol acrylate, methylene bisacrylamide, N,N'-1,4-phenylenediacrylamine, N,O-bisacryloyl-phenylalaninol, N,O-bismethacryloyl ethanolamine, pentaerythritol triacrylate, phenyltrimethoxy silane, tetramethoxysilane, tetramethylene, tetraethoxysilane, and triallyl isocyanurate.

Further, the crosslinking agent may be included in an amount of 1 to 30 parts by weight based on 100 parts by weight of the PEO-based polymer having crosslinkable functional groups. If the content of the crosslinking agent is less than 1 part by weight, crosslinking with the crosslinkable functional group may not be sufficiently achieved, and if the content of the crosslinking agent is more than 30 parts by weight, excessive crosslinking may occur and the mobility of the polymer chain decreases, which may lead to a decrease in ionic conductivity.

In certain embodiments of the disclosure, the electrolyte may further include a lithium salt. The lithium salt is contained in a dissociated ionic state in the internal space between the polymer chains, and thus, can improve the ionic conductivity of the electrolyte. At least some of the cations and/or anions dissociated from the lithium salt exist in a state bound to the polymer chain, and may exhibit mobility during charge/discharge of the battery.

The lithium salt may include one or more selected from the group consisting of $(CF_3SO_2)_2NLi$(lithium bis(tri-

fluoromethanesulphonyl)imide, LiTFSI), $(FSO_2)_2NLi$(lithium bis(fluorosulfonyl)imide, LiFSI), $LiNO_3$, LiOH, LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$, LiSCN, $LiC(CF_3SO_2)_3$, lithium chloroborate, a lower aliphatic lithium carbonate and lithium tetraphenylborate.

Further, the lithium salt may be included in an amount of 25 to 45 parts by weight based on 100 parts by weight of the polymer mixture. Specifically, the lithium salt may be included in an amount of 25 parts by weight or more, 30 parts by weight or more, or 35 parts by weight or more, or 40 parts by weight or less, or 45 parts by weight or less. If the content of the lithium salt is less than 25 parts by weight, the ionic conductivity of the electrolyte may decrease, and if the content of the lithium salt exceeds 45 parts by weight, the mechanical strength may decrease.

The above-mentioned electrolyte may include a ceramic compound. The ceramic compound has a lithium ion transfer ability to improve the conductivity of lithium ions, and preferably contains lithium atoms but does not store lithium, and has the function of transporting lithium ions, and can improve the ionic conductivity of the electrolyte.

Further, the ceramic compound may be included in a uniformly dispersed state between crosslinked polymer chains, e.g., within the three-dimensional network structure. The ceramic compound is added together in the crosslinking process, and can be uniformly dispersed without aggregation between the polymer chains formed by crosslinking. Such a ceramic compound can be advantageous in improving the mechanical strength and ionic conductivity of the electrolyte due to its uniform dispersion form.

Further, the ceramic compound may be in the form of particles. Due to the morphological characteristics of particles, they can be contained in a more uniformly dispersed state within the electrolyte. The particles of the ceramic compound may be spherical, and its diameter may be 100 nm to 1000 nm. If the diameter is less than 100 nm, the effect of non-crystallization due to the decrease in crystallinity of the polymer may be slight, and if the diameter is more than 1000 nm, dispersibility may decrease due to an increase of aggregation between particles, which may make it difficult to disperse uniformly.

The ceramic compound may be an oxide-based or phosphate-based compound, for example, an oxide-based solid electrolyte in the form of lithium metal oxide or lithium metal phosphate. More specifically, the ceramic compound may be one or more selected from the group consisting of garnet-type lithium-lanthanum-zirconium oxide(LLZO, $Li_7La_3Zr_2O_{12}$)-based compound, perovskite-type lithium-lanthanum-titanium oxide(LLTO, $Li_{3x}La_{2/3-x}TiO_3$)-based compound, phosphate-based NASICON type lithium-aluminum-titanium phosphate(LATP, $Li_{1+x}Al_xTi_{2-x}(PO_4)_3$)-based compound, lithium-aluminum-germanium phosphate(LAGP, $Li_{1.5}Al_{0.5}Ge_{1.5}(PO_4)_3$)-based compound, lithium-silicon-titanium phosphate(LSTP, $LiSiO_2TiO_2(PO_4)_3$)-based compound, and lithium-lanthanum-zirconium-titanium oxide (LLZTO)-based compound. More preferably, one or more oxide-based solid electrolytes selected from the group consisting of lithium-lanthanum-zirconium oxide(LLZO), lithium-silicon-titanium phosphate(LSTP), lithium-lanthanum-titanium oxide(LLTO), lithium-aluminum-titanium phosphate(LATP), lithium-aluminum-germanium phosphate(LAGP), and lithium-lanthanum-zirconium-titanium oxide(LLZTO) may be used.

The oxide-based or phosphate-based oxide-based solid electrolyte generally has an ionic conductivity value of up to $10^{-4} \sim 10^{-3}$ S/cm at room temperature, and has the advantages of being stable in a high voltage region, being stable in air, and thus being easy to synthesize and handle.

Further, the ceramic compound does not easily cause combustion or ignition phenomenon even under high temperature conditions of 400°C or more, and thus is high in high-temperature stability. Therefore, when the electrolyte contains a ceramic compound, it is possible to improve not only the mechanical strength but also the high-temperature stability and ionic conductivity of the electrolyte.

The ceramic compound may be included in an amount of 10 parts by weight to 100 parts by weight, or 10 parts by weight to 60 parts by weight, based on 100 parts by weight of the polymer mixture.

**If** the ceramic compound is included in an amount lower than the above mentioned range, the effects of lowering the crystallinity of the polymer and making it amorphous due to the ceramic compound are reduced, so that the effect of increasing the ionic conductivity of the electrolyte is not significant, and the overall mechanical properties of the electrolyte may also be not sufficient.

**If** the ceramic compound is included in an amount that exceeds the above mentioned range, the ceramic compound is not uniformly dispersed within the polymer, which may cause the ceramic compound particles to clump together and aggregate, resulting in the production of an electrolyte with reduced ionic conductivity.

Meanwhile, the above-mentioned electrolyte can exhibit excellent ionic conductivity under substantially all temperatures at which the battery is operated, including low temperature, room temperature, and high temperature. For example, the electrolyte can exhibit excellent ionic conductivity, namely, a low-temperature ionic conductivity measured at a temperature from -30°C to -10°C is 0.015 mS/cm or more, or 0.15 mS/cm or more, or 0.20 mS/cm or more, or 0.20 mS/cm to 0.50 mS/cm.

Furthermore, the electrolyte can exhibit excellent ionic conductivity even at a room temperature or high temperature. For example, the room-temperature ionic conductivity measured at a temperature of 25°C may be 0.5 mS/cm or more, or 1.3 mS/cm or more, or 1.5 mS/cm or more, or 1.5 mS/cm to 2.5 mS/cm, and the high-temperature ionic conductivity measured at a temperature of 50°C can be 1.1 mS/cm or more, or 3.0 mS/cm or more, or 3.1 mS/cm or more,

or 3.1 mS/cm to 4.5 mS/cm.

This ionic conductivity can be measured using an electrochemical impedance spectrometer at a certain temperature. It can be calculated from the measured resistance (Ω) of the electrolyte according to Equation 1 below:

[Equation 1]

$$\sigma_i = \frac{L}{RA}$$

in Equation 1, $\sigma_i$ is the low-temperature ionic conductivity of the electrolyte (S/cm), R is the resistance (Ω) of the electrolyte measured with the electrochemical impedance spectrometer, and L is the thickness of the electrolyte (in μm), and A is the area of the electrolyte (in $cm^2$).

## Method for preparing electrolyte

In further embodiments of the disclosure, a method for preparing the above-mentioned electrolyte is provided. The preparation method comprises the steps of: mixing a polymer mixture including a PEO-based polymer having crosslinkable functional groups and a non-crosslinkable PEO-based polymer, and a ceramic compound; performing a crosslinking reaction of the PEO-based polymer having crosslinkable functional groups included in the mixture; and exposing the crosslinked result product to a vaporized polar compound to vapor-deposit the polar compound onto the crosslinked result product.

In this case, the description of the PEO-based polymer having crosslinkable functional groups and the non-crosslinkable PEO-based polymer is the same as those set forth above.

Each step is described in more detail below.

First, a polyethylene oxide (PEO)-based polymer containing crosslinkable functional groups, a non-crosslinkable PEO-based polymer and a ceramic compound are mixed, and then a crosslinking reaction is performed on the PEO-based polymer having crosslinkable functional groups included in the mixture, thereby preparing a polymer mixture forming the above-mentioned three-dimensional network structure.

The crosslinking reaction may be performed in the presence of one or more selected from the group consisting of a crosslinking agent and an initiator.

In addition, a lithium salt may be added in the mixing step and/or crosslinking reaction step to form the electrolyte.

The ceramic compound used in the electrolyte as described above may be used, and the same amount as described above may also be used.

The crosslinking reaction may be performed in the process of drying a coating film formed by applying a solution containing the crosslinkable PEO-based polymer, the non-crosslinkable PEO-based polymer, and a ceramic compound on a substrate.

Specifically, the mixed solution may be prepared by mixing the crosslinkable PEO-based polymer, the non-crosslinkable PEO-based polymer, and the ceramic compound in a solvent, and may be prepared by additionally mixing a crosslinking agent, an initiator, and/or a lithium salt. In addition, a solution containing the crosslinkable PEO-based polymer, non-crosslinkable PEO-based polymer, the crosslinking agent, the initiator and/or the lithium salt may be prepared first, and then a mixed solution or suspension may be prepared by adding the ceramic compound.

The solvent is not particularly limited as long as it can be mixed with the crosslinkable PEO-based polymer, the non-crosslinkable PEO-based polymer, the crosslinking agent, the initiator and/or the lithium salt, and can be easily removed by the drying process. For example, the solvent may be acetonitrile, methanol, ethanol, tetrahydrofuran, water, isopropyl alcohol, dimethyl sulfoxide(DMSO), N-methyl-2-pyrrolidone(NMP), N,N-dimethyl formamide(DMF) or the like. Such a solvent is a solvent that serves as a reaction medium for forming a crosslink, and is distinguished from polar solvents contained in liquid electrolytes, and the like, and is completely removed by drying or the like after crosslinking.

The concentration of the mixed solution can be appropriately adjusted in consideration of the extent to which the molding process for preparing the electrolyte can proceed smoothly. Specifically, the concentration of the polymer solution may mean the concentration (w/w%) of the polymer in the polymer solution. The concentration of the polymer may be the concentration of the crosslinkable PEO-based polymer and the non-crosslinkable PEO-based polymer. For example, the concentration of the polymer solution may be 5% by weight to 20% by weight, and specifically, it may be 5% by weight or more, 7% by weight or more, or 9% by weight or more, and 13% by weight or less, 17% by weight or less, or 20% by weight or less. If the concentration of the polymer solution is less than 5% by weight, the concentration may be too diluted, and the mechanical strength of the electrolyte may decrease, or it may flow down when coated onto a substrate. If the concentration of the polymer solution is more than 20% by weight, it will be difficult to dissolve the lithium salt at the

desired concentration in the polymer solution, the viscosity will be high, and the solubility will be reduced, which makes it difficult to coat the lithium salt in the form of a uniform thin film.

The substrate is not particularly limited as long as it can function as a support for the coating film. For example, the substrate may SUS (Steel Use Stainless), polyethylene terephthalate film, polytetrafluoroethylene film, polyethylene film, polypropylene film, polybutene film, polybutadiene film, vinyl chloride copolymer film, polyurethane film, ethylene-vinylacetate film, ethylene-propylene copolymer film, ethylene-ethyl acrylate copolymer film, ethylene-methyl acrylate copolymer film or polyimide film.

Further, the coating method is not particularly limited as long as it can form a coating film by coating the polymer solution onto the substrate. For example, the coating method may be bar coating, roll coating, spin coating, slit coating, die coating, blade coating, comma coating, slot die coating, lip coating, spray coating or solution casting.

The coating film formed on the substrate by the coating method can be molded into a polymer from which the residual solvent is completely removed through a drying process. The drying can be performed separately by a first drying process and a second drying process in order to prevent shrinkage of the polymer due to rapid evaporation of the solvent. The first drying process can remove part of the solvent through room-temperature drying, and the second drying process can completely remove the solvent through vacuum high temperature drying. The high temperature drying may be performed at a temperature of 80°C to 130°C. **If** the high-temperature drying temperature is less than 80°C, the residual solvent cannot be completely removed, and if the high-temperature drying temperature is more than 130°C, the polymer shrinks which makes it difficult to form uniform electrolyte membranes.

Additionally, the crosslinking agent may form a bond with the crosslinkable functional group. Descriptions of the type of crosslinking agent, the content of the crosslinking agent, and the type of bond with the crosslinkable functional groups are the same as set forth above.

Moreover, the initiator may induce a radical polymerization reaction between the crosslinkable functional groups to form a crosslinking bond between the crosslinkable functional groups. The functional group that enables the radical polymerization reaction may be a functional group containing vinyl at the end, for example, an allyl group.

The initiator is not particularly limited as long as it is an initiator that can induce a radical polymerization reaction between the crosslinkable functional groups. For example, the initiator may include one or more selected from the group consisting of benzoyl peroxide, azobisisobutyronitrile, lauroyl peroxide, cumene hydroperoxide, diisopropylphenyl-hydroperoxide, tert-butyl hydroperoxide, p-methane hydroperoxide and 2,2'-azobis(2-methylpropionitrile).

The initiator may be used in an amount of 0.5 to 2 parts by weight based on 100 parts by weight of the crosslinkable PEO-based polymer having crosslinkable functional groups. When the initiator is used within the above range, it can make it possible to induce a radical polymerization reaction between the crosslinkable functional groups and efficiently form a crosslinking bond.

Further, the details regarding the content and type of the lithium salt is the same as set forth above.

Meanwhile, in the vapor deposition step, it is possible to expose the crosslinked result product to a vaporized polar compound (polar solvent) to vapor-deposit it.

Specifically, the vapor deposition can be performed by contacting the crosslinked result product with vapor of the polar compound obtained by heating the polar solvent at a temperature equal to or higher than room temperature, and penetrating into the polymer. Through such vapor deposition, a polar compound in a gaseous state may be uniformly diffused on the surface and/or interior of the polymer, so that the polar compound gas molecules may be bound to the polymer chain, or may be included in the internal space of the polymer chains in a uniformly dispersed or diffused form.

**If** the polar solvent is placed at room temperature during the vapor deposition, a trace amount of a polar solvent with a low boiling point can be slowly vaporized at room temperature and penetrate into the interior of the polymer, thereby effectively inducing a change in the conformation of the crosslinked polymer chains within the polymer.

Additionally, when heating a polar compound during vapor deposition, the vapor deposition rate can be improved. The heating temperature is not particularly limited as long as it is a temperature at which the polar compound can change phase into vapor, and may be, for example, 30°C to 80°C. Normally, PEO melts at 60°C, but the PEO-based copolymers modified with the crosslinkable functional groups have improved heat resistance, and can withstand temperatures up to 80°C, allowing the vapor deposition rate to be faster. Additionally, the heating method is not limited to any method that can supply energy to generate vapor. For example, a direct heating method using a burner or stove, or an indirect heating method using a heater or steam pipe, etc. can be used, but the method is not limited to these examples.

If the temperature is too high during the heating, there are the drawbacks in that the solvent may boil at a temperature equal to or higher than the boiling point of the polar solvent, a structural change in the solvent may occur, or deformation of the polymer may be induced, and it is difficult to control the evaporation rate during vapor deposition. Thus, in order to vapor-deposit with a trace amount of polar solvent, it may be preferable to perform vapor deposition at a heating temperature in the appropriate range as specified above.

Meanwhile, it is possible to adjust the content of the polar compound in the finally manufactured electrolyte by adjusting the vapor deposition temperature, the heating rate, the amount of polar solvent (polar compound) used for evaporation during the vapor deposition, and the vapor deposition time and rate, which will be apparent from the examples

of the like described below.

## All-solid-state battery

A further embodiment of the disclosure also relates to an all-solid-state battery comprising the above electrolyte, wherein the all-solid-state battery includes a negative electrode, a positive electrode, and a polymer solid electrolyte-containing electrolyte layer interposed between the negative electrode and the positive electrode, and the electrolyte is based on the embodiments mentioned above.

Specifically, the electrolyte includes a polymer crosslinked with a PEO (polyethylene oxide)-based polymer containing crosslinkable functional groups, a non-crosslinkable PEO-based polymer and a polar compound, and the ceramic compound is uniformly dispersed, thereby exhibiting improved ionic conductivity not only at room temperature, high temperature but also at low temperature, which may be suitable as an electrolyte for an all-solid-state battery.

Meanwhile, the positive electrode included in the all-solid-state battery includes a positive electrode active material layer, and the positive electrode active material layer may be formed on one surface of the positive electrode current collector.

The positive electrode active material layer includes a positive electrode active material, a binder, and a conductive material.

Further, the positive electrode active material is not particularly limited as long as it is a material capable of reversibly absorbing and desorbing lithium ions, and examples thereof may be a layered compound, such as lithium cobalt oxide, lithium nickel oxide, $Li[Ni_xCo_yMn_zM_v]O_2$ (where M is any one selected from the group consisting of Al, Ga, and In, or two or more elements thereof; and $0.3 \leq x < 1.0$, $0 \leq y, z \leq 0.5$, $0 \leq v \leq 0.1$, and $x+y+z+v=1$), $Li(Li_aM_{b-a-b'}M'_{b'})O_{2-c}A_c$ (where $0 \leq a \leq 0.2$, $0.6 \leq b \leq 1$, $0 \leq b' \leq 0.2$, and $0 \leq c \leq 0.2$; M includes Mn and at least one selected from the group consisting of Ni, Co, Fe, Cr, V, Cu, Zn, and Ti; M' is at least one selected from the group consisting of Al, Mg, and B; and A is at least one selected from the group consisting of P, F, S, and N), or a compound substituted with at least one transition metal; lithium manganese oxides such as the chemical formula $Li_{1+y}Mn_{2-y}O_4$ (where y ranges from 0 to 0.33), $LiMnO_3$, $LiMn_2O_3$, and $LiMnO_2$; lithium copper oxide ($Li_2CuO_2$); vanadium oxides such as $LiV_3O_3$, $LiFe_3O_4$, $V_2O_5$, and $Cu_2V_2O_7$; Ni-site type lithium nickel oxide expressed by the chemical formula $LiNi_{1-y}M_yO_2$ (where M is Co, Mn, Al, Cu, Fe, Mg, B, or Ga, and y ranges from 0.01 to 0.3); lithium manganese complex oxide expressed by the chemical formula $LiMn_{2-y}M_yO_2$ (where M is Co, Ni, Fe, Cr, Zn, or Ta, and y ranges from 0.01 to 0.1) or $Li_2Mn_3MO_3$ (where M is Fe, Co, Ni, Cu, or Zn); $LiMn_2O_4$ having a part of Li being substituted with alkaline earth metal ions; a disulfide compound; and a complex oxide formed of $Fe_2(MoO_4)_3$, but are not limited thereto.

Further, the positive electrode active material may be included in an amount of 40 to 80% by weight, based on the total weight of the positive electrode active material layer. Specifically, the content of the positive electrode active material may be 40% by weight or more or 50% by weight or more, and 70% by weight or less or 80% by weight or less. **If** the content of the positive electrode active material is less than 40% by weight, the connectivity and electrical properties between positive electrode active materials may be insufficient, and if the content of the positive electrode active material is more than 80% by weight, the mass transfer resistance may increase.

The binder is a component assisting in binding between the positive electrode active material and the conductive material, and in binding with the current collector. The binder may include one or more selected from the group consisting of styrene-butadiene rubber, acrylic styrene-butadiene rubber, acrylonitrile copolymer, acrylonitrile-butadiene rubber, nitrile butadiene rubber, acrylonitrile-styrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride and poly(vinylidene fluoride)-hexafluoropropene. Preferably, the binder may include one or more selected from the group consisting of styrene-butadiene rubber, polytetrafluoroethylene, carboxymethylcellulose, polyacrylic acid, lithium polyacrylate and polyvinylidene fluoride.

The binder may be included in an amount of 1% by weight to 30% by weight, based on the total weight of the positive electrode active material layer. Specifically, the content of the binder may be 1% by weight or more or 3% by weight or more, and 15% by weight or less or 30% by weight or less. **If** the content of the binder is less than 1% by weight, the adhesion between the positive electrode active material and the positive electrode current collector may decrease, and if the content of the binder is more than 30% by weight, the adhesion is improved, but the content of the positive electrode active material is reduced accordingly, which may result in a decrease in battery capacity.

The conductive material is not particularly limited as long as it does not cause side reactions in the internal environment of the all-solid-state battery and does not cause chemical changes in the battery but has excellent electrical

conductivity. The conductive material may typically be graphite or electrically conductive carbon, and may be, for example, but is not limited to, one selected from the group consisting of graphite such as natural graphite or artificial graphite; carbon black such as carbon black, acetylene black, Ketjen black, Denka black, thermal black, channel black, furnace black, lamp black, and summer black; carbon-based materials whose crystal structure is graphene or graphite; electrically conductive fibers such as carbon fibers and metal fibers; carbon fluoride; metal powders such as aluminum and nickel powder; electrically conductive whiskers such as zinc oxide and potassium titanate; electrically conductive oxides such as titanium oxide; electrically conductive polymers such as polyphenylene derivatives; and a mixture of two or more thereof.

The conductive material may typically be included in an amount of 0.5% to 30% by weight, based on the total weight of the positive electrode active material layer. Specifically, the content of the conductive material may be 0.5% by weight or more or 1% by weight or more, and 20% by weight or less, or 30% by weight or less. If the content of the conductive material is too low, that is, less than 0.5% by weight, it is difficult to obtain an effect on the improvement of the electrical conductivity, or the electrochemical characteristics of the battery may be deteriorated. If the content of the conductive material is too high, that is, more than 30% by weight, the amount of positive electrode active material is relatively small and thus capacity and energy density may be lowered. The method of incorporating the conductive material into the positive electrode is not particularly limited, and conventional methods known in the related art such as coating on the positive electrode active material can be used.

In addition, the positive electrode current collector supports the positive electrode active material layer and serves to transfer electrons between the external conductor and the positive electrode active material layer.

The positive electrode current collector is not particularly limited so long as it does not cause chemical changes in the all-solid-state battery and has conductivity. For example, the positive electrode current collector may be made of copper, stainless steel, aluminum, nickel, titanium, palladium, fired carbon, copper or stainless steel that is surface-treated with one of carbon, nickel, titanium, silver, or the like, an aluminum-cadmium alloy, or the like.

The positive electrode current collector may have a fine protrusion and depression structure layer or may adopt a three-dimensional porous structure in order to improve bonding strength with the positive electrode active material layer. Thereby, the positive electrode current collector may be used in any of various forms including a film, a sheet, a foil, a mesh, a net, a porous body, a foaming body, and a non-woven fabric structure.

The positive electrode as described above can be prepared according to conventional methods. Specifically, the positive electrode can be prepared by a process in which a composition for forming a positive electrode active material layer, which is prepared by mixing a positive electrode active material, a conductive material, and a binder in an organic solvent, is coated and dried on a positive electrode current collector, and optionally, compression molding is performed on the current collector to improve the electrode density. At this time, as the organic solvent, a solvent that can uniformly disperse the positive electrode active material, binder, and conductive material, and that evaporates easily, is preferably used. Specifically, acetonitrile, methanol, ethanol, tetrahydrofuran, water, isopropyl alcohol, dimethyl sulfoxide(DMSO), N-methyl-2-pyrrolidone(NMP), and the like can be mentioned.

On the other hand, the negative electrode contained in the all-solid-state battery includes a negative electrode active material layer, and the negative electrode active material layer may be formed on one surface of the negative electrode current collector.

In another example of the solid-state battery, the negative electrode (anode) may include only a negative electrode current collector without a negative electrode active material layer. In this case, lithium ions moved from the positive electrode (cathode) during the charging and discharging process of the battery may be deposited on the negative electrode current collector to form a lithium metal layer, and this lithium metal layer can act as a negative electrode active material.

On the other hand, the negative electrode active material may include a material capable of reversible intercalation and deintercalation of lithium ($Li^+$), a material that can react with lithium ions to reversibly form a lithium-containing compound, lithium metal or lithium alloy.

The material capable of reversible intercalation and deintercalation of lithium ions ($Li^+$) may be , for example, crystalline carbon, amorphous carbon, or a mixture thereof. The material that can react with the lithium ion ($Li^+$) to reversibly form a lithium-containing compound may be, for example, tin oxide, titanium nitrate , or silicon. The lithium alloy, for example, may be an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or lithium metal powder.

The negative electrode active material may be included in an amount of 40 to 80% by weight based on the total weight of the negative electrode active material layer. Specifically, the content of the negative electrode active material may be 40% by weight or more or 50% by weight or more, and 70% by weight or less or 80% by weight or less. When the content of the negative electrode active material is less than 40% by weight, the electrical properties may be not sufficient, and if the content of the negative electrode active material is more than 80% by weight, the mass transfer resistance may

increase.

Further, the binder is the same as described above for the positive electrode active material layer.

Further, the conductive material is the same as described above for the positive electrode active material layer.

The negative electrode current collector is not particularly limited so long as it does not cause chemical changes in the corresponding battery and has conductivity. For example, the negative electrode current collector may be made of copper, stainless steel, aluminum, nickel, titanium, fired carbon, copper or stainless steel that is surface-treated with one of carbon, nickel, titanium, silver, or the like, an aluminum-cadmium alloy, or the like. Further, similar to the positive electrode current collector, the negative electrode current collector may be used in various forms such as a film, a sheet, a foil, a net, a porous body, a foaming body, and a non-woven fabric structure, which fine protrusions and depressions are formed on a surface thereof.

The preparation method of the negative electrode is not particularly limited, and it can be prepared by forming a negative electrode active material layer on a negative electrode current collector using a layer or film forming method commonly used in the art. For example, methods such as compression, coating, and deposition can be used. Further, the negative electrode of the present disclosure also includes a case in which a battery is assembled in a state where a lithium thin film does not exist on the negative electrode current collector, and then a metallic lithium thin film is formed on a metal plate through initial charging.

According to still another embodiment, there are provided a battery module including the all-solid-state battery as a unit cell, a battery pack including the battery module, and a device including the battery pack as a power source.

In this case, specific examples of the device may include, but are not limited to, power tools driven by an electric motor; electric cars, including electric vehicles (EV), hybrid electric vehicles (HEV), plug-in hybrid electric vehicles (PHEV), or the like; electric carts, including electric bikes (E-bikes) and electric scooters (E-scooters); electric golf carts; electric power storage systems; or the like.

Hereinafter, preferred examples are presented to help understand the invention, but the following examples are provided only to make the invention easier to understand and the invention is not limited thereto.

**Examples 1 to 3 and Comparative Examples 1 to 3: Preparation of Electrolyte**

First, a polyethylene oxide (PEO)-based copolymer having crosslinkable functional groups represented by the following Formula 1a was prepared:

[Formula 1a]

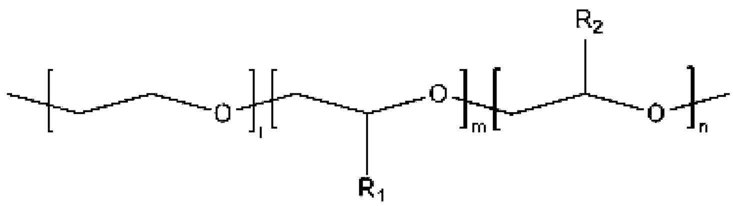

wherein in Formula 1a, $R_1$ is $-CH_2-O-(CH_2-CH_2-O)_k-CH_3$, $R_2$ is $-CH_2-O-CH_2-CH=CH_2$, k is 2, the ratio of l : m : n is 85:13:2, and the weight average molecular weight (Mw) of the copolymer is about 2,000,000 g/mol.

Meanwhile, a polyethylene oxide(PEO)-based copolymer having a non-crosslinkable structure represented by the following Formula 1b was prepared:

[Formula 1b]

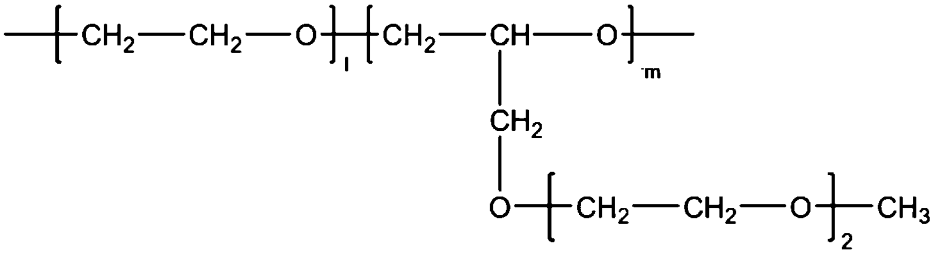

wherein in Formula 1b, the ratio of l:m is 85:15, and the weight average molecular weight (Mw) of the copolymer is about 2,000,000 g/mol.

In Examples and Comparative Examples, the non-crosslinkable copolymer of Formula 1b was used to meet the following weight ratio of the weight of the non-crosslinkable copolymer of Formula 1b to the total weight of the PEO-based copolymer containing crosslinkable functional groups of Formula 1a and the non-crosslinkable copolymer of Formula 1b, 0 (Comparative Example 1), 0.15 (Example 1), 0.3 (Example 2), 0.5 (Example 3), 0.7 (Comparative Example 2), and 1 (Comparative Example 3), and the copolymer of Formula 1a was used at the remaining weight ratios from the above. The polymer mixture was prepared by mixing the copolymers of Formulas 1a and 1b at the above-mentioned weight ratios.

The polymer mixture prepared above was added to acetonitrile, which was used as a solvent, and trimethylolpropane trimethacrylate used as a crosslinking agent, benzoyl peroxide used as an initiator, LiTFSI used as a lithium salt, and LSTP used as a ceramic compound were added thereto and mixed together to prepare a mixed solution of the polymer and ceramic compound. The mixed solution was then stirred using a magnetic bar for 24 hours. When preparing the mixed solution of the polymer and ceramic compound, 36 parts by weight of the lithium salt (LiTFSI) and 40 parts by weight of the ceramic compound (LSTP) based on 100 parts by weight of the polymer mixture were mixed. In addition, 20 parts by weight of trimethylolpropane trimethacrylate as the crosslinking agent, and 1 part by weight of benzoyl peroxide as the initiator, based on 100 parts by weight of the PEO-based copolymer having crosslinkable functional groups of Formula 1a in the mixed solution were added and mixed. The amount of the acetonitrile solvent was adjusted such that the concentration of the polymer mixture in the mixed solution was 11.1 wt.% and the concentration of the polymer mixture and the ceramic compound was 14.9 wt.%.

The mixed solution prepared above was cast on a lower substrate of a coin cell, was to a primarily dried at room temperature for 12 hours, and then secondarily dried in a vacuum oven at 100°C for 12 hours to prepare an electrolyte film with a thickness of 200 μm.

The electrolyte film was attached to a top plate of a chamber, a bottom of the chamber was filled with 50 $\mu\ell$ of ethylmethyl carbonate (EMC), and then EMC was naturally evaporated at room temperature for 72 hours to allow EMC vapor to flow into the electrolyte film attached to the top of the chamber. Thereby, the electrolyte was prepared by vapor deposition on an electrolyte film.

**Examples 4 to** 6: **Preparation of electrolyte**

An electrolyte film was prepared in the same manner as in Examples 1 to 3.

The electrolyte film was attached to a top plate of a chamber, a bottom of the chamber was filled with 300 $\mu\ell$ of ethylmethyl carbonate (EMC), and then EMC was naturally evaporated at room temperature for 72 hours to allow EMC vapor to flow into the electrolyte film attached to the top of the chamber. Thereby, the electrolyte was prepared by vapor deposition of EMC on an electrolyte film.

**Comparative Examples 4 to 9: Preparation of electrolyte (without vapor deposition)**

An electrolyte was prepared in the same manner as in Examples 1 to 3 and Comparative Examples 1 to 3, except that in Examples 1 to 3 and Comparative Examples 1 to 3, the step of vapor-depositing the ethylmethyl carbonate (EMC) solvent was not performed.

**Comparative Examples 10 to 12: Preparation of electrolyte (containing a large amount of polar solvent)**

An electrolyte film was prepared in the same manner as in Examples 1 to 3.

An electrolyte was prepared in the same manner as in Examples 1 to 3, except that the EMC solvent was not vapor-deposited but was directly injected as a liquid solvent. The EMC solvent was directly injected so that the content of the EMC solvent was 12 wt.% based on the total weight of the prepared electrolyte.

Experimental Example

Experimental Example 1: Measurement of content of polar compound

The content of the polar compound can be measured by using a scale to monitor the weight of the liquid phase evaporated with the passage of time while heating the solid electrolyte specimen. For example, it can be measured by monitoring the weight of the liquid phase that evaporates with the passage of time while heating the specimen at a temperature of 55°C using a heated electronic scale (A&D MS-70 moisture analyzer). When the amount of polar compounds evaporated with the passage of time reached saturation, the saturation amount at that time was considered as the total amount of polar compounds contained within the solid electrolyte. In Examples and Comparative Examples, the polar compound was ethyl methyl carbonate (EMC; boiling point: about 101°C), and heating under temperature rise for measuring the content of the polar compound was performed up to about 110°C.

Table 1 below shows the results of measuring the content of EMC vapor-deposited (or included) in the electrolyte.

[Table 1]

| | Content (wt.%) of EMC based on the total weight of electrolyte |
|---|---|
| Examples 1 to 3 | 1.2 |
| Examples 4 to 6 | 6 |
| Comparative Examples 1 to 3 | 1.2 |
| Comparative Examples 4 to 9 | 0 |
| Comparative Examples 10 to 12 | 12 |

Experimental Example 2: Measurement of ionic conductivity of electrolyte

To measure the ionic conductivity of the electrolytes prepared in Examples and Comparative Examples, the electrolyte was formed on the lower substrate of a coin cell with a size of 1.7671 $cm^2$, and then SUS was used as an inactive electrode (blocking electrode) to prepare the coin cell for measuring the ionic conductivity.

Resistance was measured using an electrochemical impedance spectrometer (EIS, VM3, Bio Logic Science Instrument) under a constant temperature, e.g., a constant temperature selected from -40°C to 80°C (-20°C, -10°C, 25°C-room temperature or 50°C) with an amplitude of 10 mV and a scan range of 1Hz to 0.1 MHz, and then the ionic conductivity of the electrolyte was calculated using Equation 1 below.

[Equation 1]

$$\sigma_i = \frac{L}{RA}$$

wherein in Equation 1, $\sigma_i$ is the ionic conductivity (S/cm) of the electrolyte, R is the resistance(Ω) of the electrolyte measured with an electrochemical impedance spectrometer, L is the thickness (μm) of the electrolyte, and A means the area ($cm^2$) of the electrolyte. The electrolyte sample used had L = 200 μm and A = 1.7671$cm^2$.

The ionic conductivities by temperature of the electrolytes of Examples and Comparative Examples measured by such a method are summarized in Table 2 and FIG. 2 below.

[Table 2]

| | Ionic conductivity (@-20°C; mS/cm) | Ionic conductivity (@-10°C; mS/cm) | Ionic conductivity (@25°C; mS/cm) | Ionic conductivity (@50°C; mS/cm) |
|---|---|---|---|---|
| Example 3 | 0.2376 | 0.4270 | 1.7012 | 3.1019 |
| Example 4 | 0.0150 | 0.0987 | 0.6954 | 1.1241 |
| Example 5 | 0.0285 | 0.1159 | 0.7846 | 1.5317 |
| Example 6 | 0.0496 | 0.2252 | 0.8532 | 1.8914 |
| Comparative Example 7 | 0.0003 | 0.0023 | 0.1513 | 0.8417 |
| Comparative Example 10 | 0.0136 | 0.0854 | 0.3914 | 1.1936 |

(continued)

| | Ionic conductivity (@-20°C; mS/cm) | Ionic conductivity (@-10°C; mS/cm) | Ionic conductivity (@25°C; mS/cm) | Ionic conductivity (@50°C; mS/cm) |
|---|---|---|---|---|
| Comparative Example 11 | 0.0287 | 0.1268 | 0.4371 | 1.3158 |
| Comparative Example 12 | Not measured | Not measured | Not measured | Not measured |
| * "Not measured": The crosslinking structure of the electrolyte itself has collapsed, which made it impossible to measure the ion conductivity | | | | |

Referring to Table 2 and FIG. 2, it was confirmed that the electrolytes of Examples exhibited superior ionic conductivity compared to Comparative Examples under overall temperatures, including low temperature, room temperature, and high temperature. In particular, it was confirmed that the electrolytes of Examples exhibited superior ionic conductivity even compared to Comparative Examples 10 to 12, which had a very high content of polar compounds (polar solvents). This is presumed to be because, as the polar compounds are vapor-deposited in the electrolytes of Examples, they are contained or bound in a gaseous state in the solid electrolyte. This can be confirmed from the fact that Example 3, in which the polar compound was vapor-deposited at a relatively low content and the state of the polar compound by vapor deposition was optimized, exhibited improved ionic conductivity.

On the other hand, the ionic conductivities at room temperature (25°C) of the electrolytes of Examples 1 to 3 and Comparative Examples 1 to 9 measured by the above-mentioned method are compared and shown in FIG. 1.

Referring to FIG. 1, it was confirmed that the electrolytes of Comparative Examples 4 to 9, which were prepared without addition of polar compounds (EMC) and vapor deposition, exhibited lower ionic conductivity compared to Examples, and the change pattern in ionic conductivities was also completely different from that of Examples.

It was also confirmed that Examples 1 to 3 in which the weight ratio of non-crosslinkable and crosslinkable polymers in the polymer mixture was optimized exhibited excellent ionic conductivity, whereas in Comparative Examples 2 and 3 in which the weight ratio of non-crosslinkable polymer was excessively high, the crosslinked structure of the electrolyte itself was collapsed, which made it impossible to measure the ionic conductivity (shaded area in FIG. 1). It was confirmed that Comparative Example 1 in which the weight ratio of non-crosslinkable polymer was excessively low also exhibited lower ionic conductivity than that of Examples.

Therefore, it was confirmed that the electrolytes of Examples exhibited excellent ionic conductivity over the low temperature, room temperature and high temperature, despite the extremely reduced content of polar compounds (polar solvents) due to the application of the polymer mixtures with optimized weight ratios of non-crosslinkable and crosslinkable polymers, and the vapor deposition of polar compounds.

## Claims

**1.** An electrolyte comprising:

a polymer mixture including a PEO (polyethylene oxide)-based polymer having crosslinkable functional groups, and a non-crosslinkable PEO-based polymer; a ceramic compound; and a polar compound,

wherein at least some of the crosslinkable functional groups form crosslinks, so that the PEO polymer forms a three-dimensional network structure,

wherein the polar compound is included in an amount of 0.1% by weight or more and less than 10% by weight based on the total weight of the electrolyte, and is either dispersed between the polymer chains forming the three-dimensional network structure, or bound to the polymer chains.

**2.** The electrolyte of claim 1, wherein the low-temperature ionic conductivity measured at a temperature of -30°C to -10°C is 0.015 mS/cm or more.

**3.** The electrolyte of claim 1, wherein the room-temperature ionic conductivity measured at a temperature of 25°C is 0.5 mS/cm or more.

**4.** The electrolyte of claim 1, wherein the high-temperature ionic conductivity measured at a temperature of 50°C is 1.1 mS/cm or more.

**5.** The electrolyte of claim 1, further comprising a multifunctional crosslinking agent.

6. The electrolyte of claim 5, wherein at least some of the crosslinkable functional group form crosslinks with each other via the multifunctional crosslinking agent.

7. The electrolyte of claim 1, wherein the crosslinkable functional groups are bound to the PEO-based polymer via an alkylene linker or an alkylene oxide linker having a carbon number from 0 to 10 (with the proviso that the alkylene linker having 0 carbon number represents a single bond),
and is selected from the group consisting of a hydroxyl group, a carboxyl group, an isocyanate group, a nitro group, a cyano group, an amine group, an amide group, an epoxy group and an allyl group.

8. The electrolyte of claim 1, further comprising a lithium salt.

9. The electrolyte of claim 8, wherein the lithium salt is included in an amount of 25 to 45 parts by weight based on 100 parts by weight of the polymer mixture.

10. The electrolyte of claim 1, wherein a weight ratio of the PEO-based polymer having crosslinkable functional groups to the non-crosslinkable PEO-based polymer is 5:5 to 9:1.

11. The electrolyte of claim 1, wherein the PEO-based polymer having crosslinkable functional groups is a copolymer containing repeating units of the following Formulas 1 to 3:

[Formula 1]

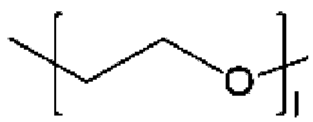

[Formula 2]

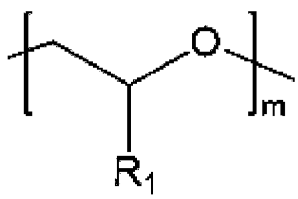

[Formula 3]

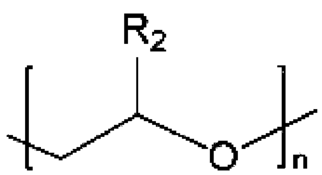

wherein in Formulas 1 to 3, $R_1$ represents $-CH_2-O-(CH_2-CH_2-O)_k-R_3$, where k is 0 to 20, and $R_3$ represents an alkyl group having a carbon number from 1 to 5,
$R_2$ represents a substituent group in which one or more crosslinkable functional groups selected from the group consisting of a hydroxyl group, a carboxyl group, an isocyanate group, a nitro group, a cyano group, an amine group, an amide group, an epoxy group and an allyl group are bound to a polymer chain via an alkylene linker or alkylene oxide linker having a carbon number from 0 to 10 (with the proviso that an alkylene linker having a carbon number of 0 represents a single bond), and
l, m and n are the number of the repeating units, wherein l and n are each independently an integer from 1 to 100000, and m is an integer from 0 to 100000.

**12.** The electrolyte of claim 1, wherein the non-crosslinkable PEO-based polymer is a copolymer containing repeating units of the following Formulas 1 and 2:

[Formula 1]

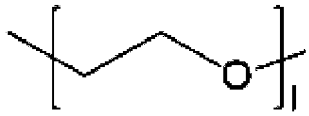

[Formula 2]

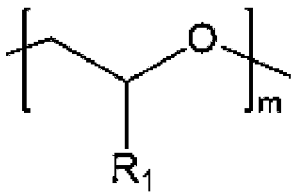

wherein in Formulas 1 and 2, $R_1$ represents $-CH_2-O-(CH_2-CH_2-O)_k-R_3$, k is 0 to 20, $R_3$ represents an alkyl group having a carbon number from 1 to 5, and
l and m are the number of the repeating units, and are each independently an integer from 1 to 100000.

**13.** The electrolyte of claim 1, wherein each of the PEO-based polymer having crosslinkable functional groups and the non-crosslinkable PEO-based polymer has a weight average molecular weight (Mw) of 100,000 g/mol to 4,000,000 g/mol.

**14.** The electrolyte of claim 1, wherein the polar compound includes one or more selected from the group consisting of carbonate-based compounds and sulfonyl-based compounds.

**15.** The electrolyte of claim 1, wherein the polar compound includes one or more selected from the group consisting of ethyl methyl carbonate (EMC), dimethyl carbonate (DMC), diethyl carbonate (DEC), ethylene carbonate (EC), propylene carbonate (PC), vinylene carbonate (VC), and sulfolane.

**16.** The electrolyte of claim 1, wherein the ceramic compound includes an oxide-based solid electrolyte of lithium metal oxide or lithium metal phosphate.

**17.** The electrolyte of claim 1, wherein the ceramic compound includes one or more selected from the group consisting of a lithium-lanthanum-zirconium oxide (LLZO) compound, a lithium-silicon-titanium phosphate based (LSTP) compound, a lithium-lanthanum-titanium oxide based (LLTO) compound, a lithium-aluminum-titanium phosphate based (LATP) compound, a lithium-aluminum-germanium phosphate based (LAGP) compound, and a lithium-lanthanum-zirconium-titanium oxide-based (LLZTO) compound.

**18.** The electrolyte of claim 1, wherein the ceramic compound is in the form of particles having a diameter of 100 nm to 1000 nm.

**19.** The electrolyte of claim 1, wherein the ceramic compound is included in an amount of 10 to 100 parts by weight based on 100 parts by weight of the polymer mixture.

**20.** A method for preparing the electrolyte of any one of claims 1 to 19, the method comprising the steps of:

mixing a polymer mixture including a PEO-based polymer having crosslinkable functional groups and a non-crosslinkable PEO-based polymer, and a ceramic compound;
performing a crosslinking reaction of the PEO-based polymer having crosslinkable functional groups included in the mixture; and

exposing the crosslinked result product to a vaporized polar compound to vapor-deposit the polar compound onto the crosslinked result product.

**21.** The method for preparing the electrolyte of claim 20, wherein the polar compound is dispersed on or bound to the electrolyte in a gaseous state.

**22.** An all-solid-state battery comprising an electrolyte layer comprising the electrolyte of any one of claims 1 to 19.

[FIG. 1]

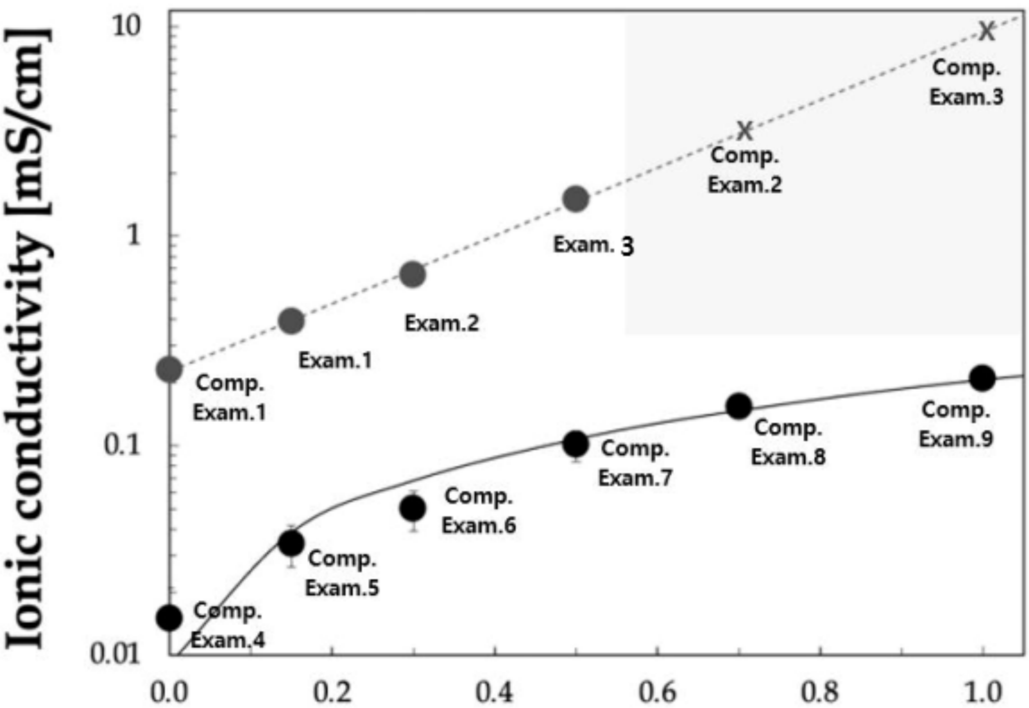
Ionic conductivity [mS/cm]
10
1
0.1
0.01
0.0
0.2
0.4
0.6
0.8
1.0
Comp. Exam.1
Exam.1
Exam.2
Exam. 3
Comp. Exam.2
Comp. Exam.3
Comp. Exam.4
Comp. Exam.5
Comp. Exam.6
Comp. Exam.7
Comp. Exam.8
Comp. Exam.9

[FIG. 2]

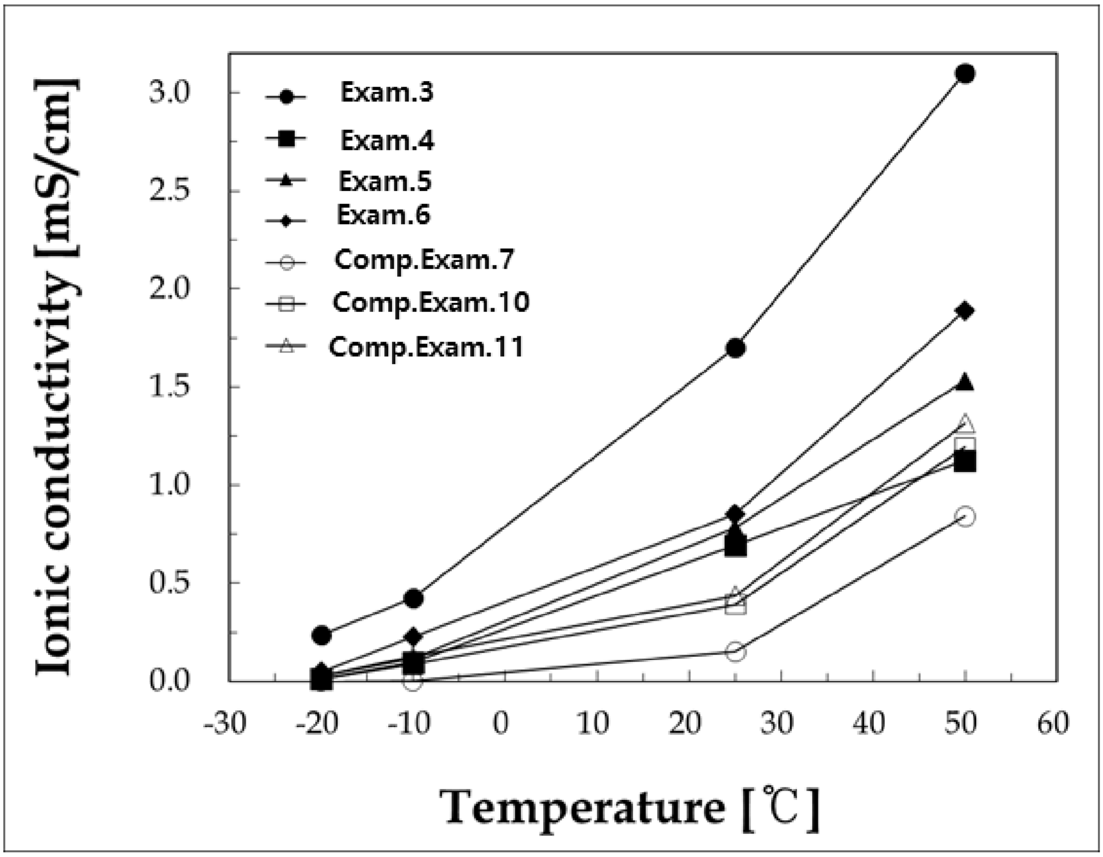
Ionic conductivity [mS/cm]
3.0
2.5
2.0
1.5
1.0
0.5
0.0
-30
-20
-10
0
10
20
30
40
50
60
Temperature [℃]
Exam.3
Exam.4
Exam.5
Exam.6
Comp.Exam.7
Comp.Exam.10
Comp.Exam.11

**INTERNATIONAL SEARCH REPORT**

International application No. **PCT/KR2024/096146**

**A. CLASSIFICATION OF SUBJECT MATTER**

**H01M 10/0565**(2010.01)i; **H01M 10/42**(2006.01)i; **H01M 10/052**(2010.01)i

According to International Patent Classification (IPC) or to both national classification and IPC

**B. FIELDS SEARCHED**

Minimum documentation searched (classification system followed by classification symbols)

H01M 10/0565(2010.01); C08J 5/22(2006.01); C08L 71/02(2006.01); G02F 1/15(2006.01); H01B 1/06(2006.01); H01B 1/12(2006.01); H01M 6/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PEO(polyethylene oxide), 가교결합(cross-linking), 고분자 화합물(polymer compound), 세라믹 화합물(ceramic compound), 극성 화합물(polar compound), 전해질(electrolyte)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2012-0117853 A (MIE UNIVERSITY) 24 October 2012 (2012-10-24) See paragraphs [0029], [0038], [0047], [0061], [0091]-[0095], [0108], [0173]-[0180] and [0182]. | 1-22 |
| Y | US 4822701 A (BALLARD, D. G. H. et al.) 18 April 1989 (1989-04-18) See column 2, lines 58-68; column 4, lines 55-74; column 5, lines 9-11; column 9, lines 5-12 and column 10, lines 6-52. | 1-22 |
| Y | JP 2019-102301 A (KOGAKUIN UNIV.) 24 June 2019 (2019-06-24) See paragraph [0047]. | 2-4,16,17 |
| Y | JP 09-324114 A (DAISO CO., LTD.) 16 December 1997 (1997-12-16) See paragraphs [0005]-[0007], [0013] and [0016]. | 12,13 |
| A | KR 10-2004-0004408 A (DU PONT-MITSUI POLYCHEMICALS CO., LTD. et al.) 13 January 2004 (2004-01-13) See entire document. | 1-22 |

☐ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **19 December 2024** | **19 December 2024** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2024/096146**

| Patent document cited in search report | Publication date (day/month/year) | Patent family member(s) | Publication date (day/month/year) |
|---|---|---|---|
| KR 10-2012-0117853 A | 24 October 2012 | CN 102770999 A | 07 November 2012 |
| | | CN 102770999 B | 13 May 2015 |
| | | JP 2013-099497 A1 | 13 June 2013 |
| | | JP 5429829 B2 | 26 February 2014 |
| | | KR 10-1439716 B1 | 12 September 2014 |
| | | US 2012-0315547 A1 | 13 December 2012 |
| | | WO 2011-099497 A1 | 18 August 2011 |
| US 4822701 A | 18 April 1989 | AU 1988-23687 A | 24 March 1988 |
| | | EP 0260847 A1 | 23 March 1988 |
| | | NZ 221722 A | 26 July 1990 |
| JP 2019-102301 A | 24 June 2019 | None | |
| JP 09-324114 A | 16 December 1997 | EP 0742563 A1 | 13 November 1996 |
| | | EP 0742563 B1 | 12 April 2000 |
| | | JP 3022317 B2 | 21 March 2000 |
| | | KR 10-0402997 B1 | 29 April 2004 |
| | | KR 10-1996-0041229 A | 19 December 1996 |
| KR 10-2004-0004408 A | 13 January 2004 | AU 2002-595301 A | 29 April 2002 |
| | | CA 2426129 A1 | 25 April 2002 |
| | | CA 2426129 C | 07 June 2011 |
| | | CN 100307740 C | 28 March 2007 |
| | | CN 100555589 A | 15 December 2004 |
| | | DE 60118618 T2 | 11 January 2007 |
| | | EP 1368849 A2 | 10 December 2003 |
| | | EP 1368849 B1 | 05 April 2006 |
| | | HK 1070185 A1 | 10 June 2005 |
| | | JP 2002-198095 A | 12 July 2002 |
| | | JP 4068826 B2 | 26 March 2008 |
| | | KR 10-0866242 B1 | 30 October 2008 |
| | | US 2006-0204854 A1 | 14 September 2006 |
| | | US 7557166 B2 | 07 July 2009 |
| | | WO 02-033765 A3 | 02 October 2003 |
| | | WO 02-33765 A2 | 25 April 2002 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230123075
- KR 1020240044702
- KR 1020240123905